# EUROPÄISCHE PATENTSCHRIFT

(11) **EP 2 862 677 B1**
(45) Veröffentlichungstag und Bekanntmachung des Hinweises auf die Patenterteilung: **01.01.2020**
(21) Anmeldenummer: 14187513.8
(22) Anmeldetag: 02.10.2014
(51) Int. Cl.: B25J 9/00, B25J 9/16

(54) **Verfahren zum Handhaben von Objekten mittels wenigstens zweier Industrieroboter**
Method for handling objects using at least two industrial robots
Procédé de manipulation d'objets au moyen d'au moins deux robots industriels

(30) Priorität: 15.10.2013 DE 102013220798
(43) Veröffentlichungstag der Anmeldung: 22.04.2015
(73) Patentinhaber: KUKA Deutschland GmbH, 86165 Augsburg (DE)
(72) Erfinder: Riedel, Martin, 86165 Augsburg (DE)
(74) Vertreter: Ege Lee & Partner Patentanwälte PartGmbB

(56) Entgegenhaltungen:
- EP-A1- 2 396 148
- JP-A- S6 025 673
- JP-A- 2009 262 304

## Beschreibung

Die Erfindung betrifft ein Verfahren gemäß dem Oberbegriff des Anspruchs 1 zum Handhaben von Objekten mittels wenigstens zweier Industrieroboter, die jeweils einen Manipulatorarm umfassen, der mehrere aufeinander folgende Glieder aufweist, die durch verstellbare Gelenke verbunden sind, die von wenigstens einer Steuervorrichtung angesteuert verstellbar sind, wobei der eine Manipulatorarm ein erstes Endglied und der wenigstens eine andere Manipulatorarm ein zweites Endglied aufweist.

Ein solches Verfahren ist aus der EP 2 396 148 B1 bekannt.

Aus der EP 2 392 435 A2 ist ein Verfahren zum Manipulieren von Werkstücken mittels kooperierender Manipulatoren bekannt, die von wenigstens einer Steuervorrichtung gesteuert sind, insbesondere mittels eines Werkstück-Handhabungssystems, aufweisend die Schritte des manuell geführten Bewegens mindestens eines ersten Manipulators in wenigstens einem seiner Freiheitsgrade und des automatischen Steuerns mindestens eines zweiten Manipulators in Abhängigkeit des manuell geführten Manipulators. Das dortige Werkstück-Handhabungssystem weist mindestens zwei zur Handhabung von Werkstücken kooperierende Manipulatoren auf, die mittels wenigstens einer frei programmierbaren Steuervorrichtung in drei oder mehr Achsen automatisch steuerbar und/oder programmierbar sind, wobei mindestens ein erster Manipulator in wenigstens einem seiner Freiheitsgrade zum manuell geführten Bewegen eingerichtet ist, und die Steuervorrichtung eingerichtet ist, mindestens einen zweiten Manipulator in Abhängigkeit des manuell geführten Manipulators automatisch zu steuern.

Aus der EP 2 396 148 B1 ist ein Industrieroboter mit zwei Armen bekannt, die mit einer gemeinsamen Roboterbasis verbunden sind, wobei jeder Arm jeweils ein daran angebrachtes Werkzeug aufweist. Ein erster der Arme umfasst ein erstes Auflager und ein zweiter der Arme umfasst ein zweites Auflager. Das erste Auflager und das zweite Auflager sind zum Angrenzen aneinander während des Betriebs der Arme des Roboters ausgebildet, wodurch eine Kontaktkraft über das Angrenzen des ersten und zweiten Auflagers zwischen den zwei Armen erzeugt wird, sodass eine Kraft während des Betriebs des Roboters von dem einem Arm auf den anderen Arm übertragen werden kann. Aufgabe der Erfindung ist es, ein Verfahren zum Handhaben von Objekten zu schaffen, wodurch die Leistungsfähigkeit in der Handhabe von Objekten mittels der Industrieroboter verbessert ist.

Diese Aufgabe wird erfindungsgemäß gelöst durch ein Verfahren zum Handhaben von Objekten mittels wenigstens zweier Industrieroboter, die jeweils einen Manipulatorarm umfassen, der mehrere aufeinander folgende Glieder aufweist, die durch verstellbare Gelenke verbunden sind, die von wenigstens einer Steuervorrichtung angesteuert verstellbar sind, wobei der eine Manipulatorarm ein erstes Endglied und der wenigstens eine andere Manipulatorarm ein zweites Endglied aufweist, aufweisend die folgenden Schritte:
- Greifen des Objekts mittels des einen Manipulatorarms derart, dass das Objekt mit dem ersten Endglied verbunden ist, und
- Ankoppeln eines Gliedes des wenigstens einen anderen Manipulatorarms an eines der Glieder des einen Manipulatorarms,
wobei ein Ankoppeln des Gliedes des wenigstens einen anderen Manipulatorarms an eines der Glieder des einen Manipulatorarms durch eine Greifvorrichtung erfolgt, welche mit dem Glied des wenigstens einen anderen Manipulatorarms verbunden ist und welche das Glied des einen Manipulatorarms im angekoppelten Zustand der Glieder ergreift.

Manipulatorarme mit zugehörigen Robotersteuerungen, insbesondere Industrieroboter sind Arbeitsmaschinen, die zur automatischen Handhabung und/oder Bearbeitung von Werkstücken mit Werkzeugen ausgerüstet werden können und in mehreren Bewegungsachsen beispielsweise hinsichtlich Orientierung, Position und Arbeitsablauf programmierbar sind. Industrieroboter weisen üblicherweise einen Manipulatorarm mit mehreren über Gelenke verbundene Glieder und programmierbare Robotersteuerungen (Steuervorrichtungen) auf, die während des Betriebs die Bewegungsabläufe des Manipulatorarms automatisch steuern bzw. regeln. Die Glieder werden über Antriebe, insbesondere elektrische Antriebe, die von der Robotersteuerung angesteuert werden, insbesondere bezüglich der Bewegungsachsen des Industrieroboters, welche die Bewegungsfreiheitsgrade der Gelenke repräsentieren, bewegt, d.h. durch Verstellen der Gelenke mittels der elektrischen Antriebe werden die Glieder bewegt. Jeder Manipulatorarm kann von einer eigenen Steuervorrichtung angesteuert sein. Die zwei oder mehreren Manipulatorarme können jedoch auch von einer gemeinsamen Steuervorrichtung angesteuert sein.

Der wenigstens eine andere Manipulatorarm, welcher gemäß einem beliebigen der erfindungsgemäßen Verfahren an den einen Manipulatorarm zur Unterstützung angekoppelt ist, kann zeitlich vor einem Durchführen des jeweiligen erfindungsgemäßen Verfahrens und/oder zeitlich nach einem Durchführen des jeweiligen erfindungsgemäßen Verfahrens als eigenständiger Manipulatorarm bzw. Industrieroboter betrieben werden. Insoweit können die erfindungsgemäßen Verfahren in einer Roboterzelle mit Industrierobotern durchgeführt werden, die zwei oder mehrere Manipulatorarme aufweisen, die außerhalb der erfindungsgemäßen Verfahren gemäß den bekannten Methoden angesteuert sind.

Ein mehrere über Gelenke verbundene Glieder aufweisende Manipulatorarm kann als ein Knickarmroboter mit mehreren seriell nacheinander angeordneten Gliedern und Gelenken konfiguriert sein, insbesondere kann der Manipulatorarm als ein Sechsachs-Knickarmroboter oder Siebenachs-Knickarmroboter ausgebildet sein.

Manipulatorarme mit zugehörigen Robotersteuerungen, wie Industrieroboter können aber insbesondere auch sogenannte Leichtbauroboter sein, die sich zunächst von üblichen Industrierobotern dadurch unterscheiden, dass sie eine für die Mensch-Maschine-Kooperation günstige Baugröße aufweisen und dabei eine zu ihrem Eigengewicht relativ hohe Tragfähigkeit aufweisen. Daneben können Leichtbauroboter insbesondere kraftgeregelt statt positionsgeregelt betrieben werden, was beispielsweise ein manuelles Verstellen der Pose des Manipulatorarmes vereinfacht. Außerdem kann dadurch eine sichere Mensch-Maschine-Kooperation erreicht werden, da beispielsweise unbeabsichtigte Kollisionen des Manipulatorarmes mit Personen entweder verhindert oder zumindest derart abgeschwächt werden können, so dass den Personen kein Schaden entsteht. Ein solcher Manipulatorarm bzw. ein solcher Leichtbauroboter kann mehr als sechs Freiheitsgrade aufweisen, so dass insoweit ein überbestimmtes System geschaffen wird, wodurch derselbe Punkt im Raum in gleicher Orientierung in mehreren verschiedenen Posen des Manipulatorarms erreicht werden kann. Der Leichtbauroboter kann auf externe Krafteinwirkungen in geeigneten Weisen reagieren. Zur Kraftmessung können Kraftsensoren verwendet werden, die in allen drei Raumrichtungen Kräfte und Drehmomente messen können. Alternativ oder ergänzend können die externen Kräfte auch sensorlos, beispielsweise anhand der gemessenen Motorströme der Antriebe an den Gelenken des Leichtbauroboters abgeschätzt werden. Als Regelungskonzepte kann beispielsweise eine indirekte Kraftregelung durch Modellierung des Leichtbauroboters als mechanischer Widerstand (Impedanz) oder eine direkte Kraftregelung verwendet werden.

Die von den Industrierobotern zu handhabenden Objekte können beispielsweise Werkstücke sein, die anzuheben, zu halten, zu bewegen und/oder in sonstiger Weise manipuliert werden sollen. Darüber hinaus können die zu handhabenden Objekte aber auch Werkzeuge sein, welche von dem Industrieroboter geführt werden sollen, beispielsweise um ein separates Werkstück mit diesem Werkzeug zu bearbeiten, eine Montage vorzunehmen, und/oder auf das Werkstück in einer anderen Art und Weise einzuwirken.

Das Endglied eines Manipulatorarms kann generell einen so genannten Handflansch bilden, an dem beispielsweise ein Greifer befestigt sein kann, der zum Halten des Objekts ausgebildet ist. Beispielsweise im Falle eines Werkzeugs als ein zu handhabendes Objekt kann das Werkzeug unmittelbar, ggf. mittels einer Befestigungsvorrichtung an dem Handflansch befestigt sein oder alternativ kann das Werkzeug mittels eines Greifers gehalten sein, der an dem Handflansch befestigt ist.

Bei einem erfindungsgemäßen Ankoppeln eines Gliedes des wenigstens einen anderen Manipulatorarms an eines der Glieder des einen Manipulatorarms, ist der Begriff "Glieder des einen Manipulatorarms" insoweit weit zu verstehen, nämlich dahingehend, dass als Glied des Manipulatorarms auch ein fest mit dem Endglied des Manipulatorarms verbundener Endeffektor, insbesondere ein Greifer bezeichnet sein kann. Dies betrifft insbesondere einen Grundkörper des Endeffektors bzw. des Greifers, welcher typischer Weise mit dem Endglied, insbesondere einem Handflansch des Manipulatorarms fest, insbesondere starr verbunden ist, so dass diese Bauteil insofern ein einziges starres Glied bilden.

Indem erfindungsgemäß in einem Verfahren zum Handhaben von Objekten mittels wenigstens zweier Industrieroboter, mittels des einen Manipulatorarms ein Greifen des Objekts derart erfolgt, dass das Objekt mit dem ersten Endglied verbunden ist, und ein Ankoppeln eines Gliedes des wenigstens einen anderen Manipulatorarms an eines der Glieder des einen Manipulatorarms erfolgt, kann die Leistungsfähigkeit in der Handhabe von Objekten dadurch verbessert werden, dass der wenigstens eine andere Manipulatorarm den einen Manipulatorarm bei seiner Handhabung des Objekts unterstützt.

Dies bedeutet, dass nicht der eine Manipulatorarm und der wenigstens eine andere Manipulatorarm das Objekt gemeinsam handhaben bzw. halten, wie dies beispielsweise im Falle von kooperierenden Industrierobotern der Fall ist, bei denen sowohl ein erster Industrieroboter das Objekt an einer Greifstelle des Objekts hält und ein zweiter und ggf. dritter oder weiterer Industrieroboter das selbe Objekt an einer anderen Greifstelle des Objekts hält. Vielmehr ist erfindungsgemäß vorgesehen, dass allein der erste Industrieroboter das Objekt greift und insoweit festhält und ein zweiter Industrieroboter, ggf. ein dritter oder weiterer Industrieroboter die Handhabung des Objekts unterstützt, in dem er sich an ein Glied des ersten Industrieroboters ankoppelt, ohne das Objekt unmittelbar selbst zu fassen.

Eine kompakte Ausführung der Gelenke mit innenliegenden Servoantrieben und integrierter Steuerungselektronik und Sensorik hat viele Vorteile für den Betrieb, begrenzt jedoch die Leistungsfähigkeit von Leichtbaurobotern. Dies betrifft vor allem die Traglast, die absichtlich gering gehalten wird, um beispielsweise ein Gefährdungspotential für den Bediener bei Interaktion zu reduzieren. Viele Anwendungen, speziell im industriellen Bereich, erfordern jedoch eine höhere Traglast, die aber meist nur temporär benötigt wird. Eine permanente Vergrößerung der Antriebsleistung ist hier aus technischer und wirtschaftlicher Sicht nicht zielführend. Zudem erfordern einige Anwendungen auch verbesserte kinetostatische Eigenschaften des Roboters in anderen Bereichen, wie beispielsweise eine höhere Steifigkeit, um externen Prozesskräften unnachgiebig entgegenwirken zu können oder eine höhere Genauigkeit für hochpräzise Fügeoperationen.

Eine Verbesserung der Leistungsfähigkeit in der Handhabung von Objekten insbesondere beim Einsatz von Leichtbaurobotern kann vor allem durch eine temporäre Vergrößerung der Traglast erreicht werden. Alternativ oder ergänzend zu einer temporären Vergrößerung der Traglast kann aber auch beispielsweise eine Erhöhung der Steifigkeit und/oder eine Verbesserung der Genauigkeit mit einem der erfindungsgemäßen Verfahren erreicht werden.

Dabei wird das Objekt nur über einen Greifer an einer Greifstelle gegriffen, sodass auch kleinere Bauteile, die die Traglast des einzelnen Roboters überschreiten, gehandhabt werden können. Zusätzliche Bereiche am Bauteil zur Platzierung von weiteren Greifern, wie es bei üblichen kooperierenden Robotern erforderlich wäre, sind nun nicht mehr notwendig.

Erfindungsgemäß sollen die Robotereigenschaften bedarfsgerecht und/oder temporär, bzw. spezifisch für die jeweilige Aufgabe anpassbar sein. Eine solche Anpassung kann dabei automatisch und ohne zusätzliches Einwirken von außen, d.h. ohne, dass Bauteile am Roboter verändert werden müssten oder evtl. manuelle Tätigkeiten durch den Benutzer notwendig wären. Mit den erfindungsgemäßen Verfahren können neue, geänderte Eigenschaften des Roboters kosten- und/oder zeitneutral bereitgestellt werden.

Dabei kann der Aufbau des Roboters im Allgemeinen unverändert bleiben, so dass auf gängige Serienvarianten von Industrierobotern zurückgegriffen werden kann. Dies ermöglicht es, die Vorteile eines Leichtbauroboters weiterhin nutzen zu können. Beispielsweise die Eigenschaften des handgeführten Programmierens (Teachen), sowie die Möglichkeit der direkten Zusammenarbeit von Mensch und Roboter können dabei erhalten bleiben.

Eine seriell aufgebaute Manipulatorstruktur, wie beispielsweise die eines Leichtbauroboters, besitzt zwar eine gute Beweglichkeit, kann jedoch auf Grund der langen Hebellängen oftmals keine großen Kräfte aufnehmen. Zudem reduziert sich bei einem solchen seriellen Aufbau des Manipulatorarms die Traglast, da insbesondere die in der kinematischen Kette proximalen Antriebe die nachfolgenden distalen Antriebe mittragen müssen.

Die erwähnten Anpassungen der Eigenschaften können durch eine geeignete Kopplung zweier oder mehrerer Manipulatorarme erfolgen. Der Manipulatorarm, der die Aufgabe nicht alleine durchführen kann, wird von mindestens einem weiteren Manipulatorarm unterstützt, derart, dass sich dieser weitere Manipulatorarm mit dem einen Manipulatorarm direkt verbindet und Kräfte auf dessen Struktur übertragen kann. Damit kann verstanden werden, dass hierbei insoweit eine Rekonfiguration der Kinematikstruktur stattfindet. Die serielle kinematische Kette wird um zusätzliche Ketten so erweitert, dass geschlossene Teilketten entstehen. Diese neu aufgebaute, insoweit parallelkinematische Struktur kann bedarfsgerecht und schnell durch Kopplung von Gliedern der wenigstens zwei Manipulatorarme erzeugt werden. Die Traglast und/oder die Steifigkeit dieser neuen Gesamtstruktur kann deutlich über derjenigen von beiden Einzelstrukturen liegen. Ebenso kann die Positionsgenauigkeit des Manipulatorarms gesteigert werden, da die aufgrund des anderen Manipulatorarms insoweit redundant angeordneten Drehgebern in der geschlossenen Teilkette eine Verbesserung der Messgenauigkeit ermöglichen können. Sind diese speziellen Eigenschaften nicht erforderlich, kann sich der zweite Manipulatorarm wieder von dem einen Manipulatorarm trennen, so dass diese wieder einzelne serielle kinematische Ketten bilden, die dann wiederum separat und individuell wie bisher im gleichen Arbeitsraum zusammen arbeiten können.

Das Objekt wird dabei nur über einen Greifer - den Greifer des unterstützten Roboters - geführt, wodurch auch kleine und kompakte Bauteile gehandhabt werden können. Bereits entwickelte Programme zur automatisierten Greifplanung können hier weiterhin genutzt werden.

Ebenfalls bleibt auch hier die zusätzliche Möglichkeit der Kopplung über das Werkstück - wie bei kooperierenden Robotern - erhalten und kann situationsabhängig sogar zusätzlich genutzt werden, um den Roboterverbund selbst während eines erfindungsgemäßen Verfahrens zusätzlich unterstützen zu können, falls dies zweckmäßig sein sollte. Hierbei müsste das Werkstück jedoch die Handhabung über mehrere Greifstellen zulassen.

Die Kopplung zwischen den Strukturen kann prinzipiell an beliebigen Gliedern erfolgen. Aufgrund einer zumeist besseren Kraftübertragung, kann die Abstützung jedoch insbesondere an einem der distalen Glieder des führenden Manipulatorarms erfolgen. Der zusätzliche Manipulatorarm kann zur Kraftunterstützung insbesondere dasjenige Glied in seiner eigenen seriellen kinematischen Kette verwenden, welches den Freiheitsgrad und die Beweglichkeit des führenden, das Objekt handhabenden Manipulatorarms am wenigsten beeinflusst. Vorzugsweise sind dies ebenfalls die distalen Glieder.

Die mechanische Verbindung zwischen den Manipulatorarmen erfolgt durch die Verwendung eines Greifers.

Das anzukoppelnde Glied des wenigstens einen anderen Manipulatorarms kann das zweite Endglied sein. Dabei ist ein Greifer an dem zweiten Endglied des wenigsten einen anderen Manipulatorarm befestigt Indem das anzukoppelnde Glied das zweite Endglied ist, können alle Gelenke des wenigstens einen anderen Manipulatorarms genutzt werden, um beispielsweise den Greifer hinsichtlich seiner Position und/oder Orientierung im Raum stellen zu können, so dass das anzukoppelnde Glied sehr flexibel und universell an einer gewünschten Stelle des einen Manipulatorarms auf einfache Weise ankoppeln kann. Indem das anzukoppelnde Glied das zweite Endglied ist, ist insbesondere die Reichweite am größten, um eine Vielzahl von Stellen des einen Manipulatorarms durch das anzukoppelnde Glied des wenigstens einen anderen Manipulatorarms erreichen zu können. Damit ist eine Kopplung des einen Manipulatorarms und des wenigstens einen anderen Manipulatorarms in einer großen Anzahl von Posen möglich.

Das Verfahren zum Handhaben von Objekten kann den weiteren Schritt aufweisen:
- gemeinsames Anheben des Objekts durch den einen Manipulatorarm und den wenigstens einen anderen Manipulatorarm derart, dass der wenigstens eine andere Manipulatorarm über sein an einem der Glieder des einen Manipulatorarms angekoppeltes Glied einen Teil der Haltekräfte übernimmt.

Indem der eine Manipulatorarm mit dem wenigstens einen anderen Manipulatorarm gekoppelt ist, kann das Objekt dadurch gemeinsam angehoben werden, dass nur der eine Manipulatorarm das Objekt ergreift und der wenigstens eine andere Manipulatorarm über sein an einem der Glieder des einen Manipulatorarms angekoppeltes Glied zumindest einen Teil der Haltekräfte übernimmt. Der wenigstens eine andere Manipulatorarm übernimmt dabei zumindest einen Teil der Haltekräfte dadurch, dass er über das angekoppelte Glied Haltekräfte von dem einen Manipulatorarm übernimmt bzw. in diesen einleitet, der das Objekt gegriffen hat. Dies bedeutet, dass zwei oder mehrere Manipulatorarme das Objekt zwar gemeinsam halten, anheben und/oder absenken, jedoch ausschließlich der eine Manipulatorarm das Objekt gegriffen hat bzw. festhält, wo hingegen die weiteren Manipulatorarme in keinem direkten Kontakt zum Objekt stehen, dieses Objekt also nicht mit ihren eigenen Greifern ergriffen haben. So können beispielsweise sehr kleine, aber schwere Objekte gehalten und/oder angehoben bzw. kontrolliert abgesenkt werden, die aufgrund ihrer Abmaße und der Größe der Greifer der Manipulatorarme aus Platzgründen nicht von zwei oder mehreren Greifern ergriffen werden können. Darüber hinaus muss nur der eine Greifer derart ausgebildet sein, dass er zum Greifen des Objekts geeignet und ausgebildet ist. Die weiteren Greifer der anderen Manipulatorarme können hingegen konventionell ausgebildet sein, soweit sie geeignet und ausgebildet sind, an das gewünschte Glied des einen Manipulatorarms ankoppeln zu können. Dies ist einfacher möglich, weil die Größe bzw. Gestalt der Glieder der Manipulatorarme im Vorhinein bekannt sind, wo hingegen die Größe bzw. Gestalt der zu handhabenden Objekte aufgrund ihrer Vielfältigkeit im Vorfeld nicht generell bekannt sind.

Das Verfahren zum Handhaben von Objekten kann die weiteren Schritte aufweisen:
- Einwirken auf das Objekt mittels eines Gegenstandes oder Einwirken auf einen Gegenstand mittels des Objekts, und
- vollständiges oder teilweises Aufnehmen von Reaktionskräften und/oder Reaktionsmomente, welche in Folge des Einwirkens in den einen Manipulatorarm eingeleitet werden, durch den wenigstens einen anderen Manipulatorarm über sein an einem der Glieder des einen Manipulatorarms angekoppeltes Glied.

In einer solchen Ausführung des Verfahrens besteht das Handhaben des Objekts in einem Einwirken auf das Objekt mittels eines Gegenstandes oder Einwirken auf einen Gegenstand mittels des Objekts. Unter Einwirken kann beispielsweise das Bearbeiten, wie Bohren, Fräsen, Schleifen, Polieren, Montieren usw. eines Werkstücks durch ein Werkzeug sein. In der ersten Alternative kann das Objekt somit das Werkstück sein, welches durch den Manipulatorarm festgehalten wird und durch ein Werkzeug, welches den Gegenstand bildet, bearbeitet wird. Dabei kann der Manipulatorarm, welcher das Werkstück greift, das Werkstück entweder lediglich festhalten bspw. auf einem Bearbeitungstisch, so dass das externe, separate Werkzeug auf das Werkstück einwirken kann, oder das vom Manipulatorarm gegriffene Werkstück kann an das Werkzeug, insbesondere feststehende Werkzeug herangeführt werden bzw. daran entlang geführt werden. In der zweiten Alternative kann das Objekt das Werkzeug sein, welches durch den Manipulatorarm geführt wird und welches ein separat angeordnetes Werkstück, das in diesem Fall den Gegenstand bildet, bearbeitet.

Das Verfahren zum Handhaben von Objekten kann den weiteren Schritt aufweisen:
- Ansteuern der Gelenke des einen Manipulatorarms mittels der wenigstens einen Steuervorrichtung auf Grundlage von Messwerten über die Stellungen der Gelenke sowohl des einen Manipulatorarms, als auch auf Grundlage von Messwerten über die Stellungen der Gelenke des wenigstens einen anderen Manipulatorarms.

Im Allgemeinen wird ein Manipulatorarm derart angesteuert, dass seine gewünschte einzunehmende Pose (Positionen und Orientierungen) dadurch eingestellt wird, dass alle Gelenke in ihre jeweils vorbestimmten Stellungen gebracht werden. Dies erfolgt, indem die Steuervorrichtung beispielsweise auf Grundlage eines Roboterprogramms oder der Eingaben auf einem Programmierhandgerät die Antriebe des Manipulatorarms entsprechend ansteuert, um die Gelenke zu verstellen. Damit die gewünschten Soll-Stellungen der Gelenke eingestellt werden können, sind im Allgemeinen Sensoren an den Gelenken angeordnet, welche die momentanen Ist-Stellungen der Gelenke messen. Die von den Sensoren gelieferten Werte der Ist-Stellungen können nicht beliebig genau sein, insbesondere können die Werte der Ist-Stellungen auch fehlerbehaftet sein, so dass die gewünschte einzunehmende Pose nur mit einer gewissen Toleranz genau angefahren werden können. Indem nun verfahrensgemäß ein Ansteuern der Gelenke des einen Manipulatorarms mittels der wenigstens einen Steuervorrichtung auf Grundlage von Messwerten über die Stellungen der Gelenke sowohl des einen Manipulatorarms, als auch auf Grundlage von Messwerten über die Stellungen der Gelenke des wenigstens einen anderen Manipulatorarms erfolgt, kann die Positioniergenauigkeit des einen Manipulatorarms verbessert werden. Dies erfolgt in einer solchen Ausführungsform dadurch, dass die Antriebe des einen Manipulatorarms von der Robotersteuerung nicht nur auf Basis der von den Sensoren dieses einen Manipulatorarms gelieferten Werte der Ist-Stellungen angesteuert werden, sondern indem zusätzlich auch die Werte der Ist-Stellungen der Gelenke des angekoppelten wenigsten einen weiteren Manipulatorarms berücksichtigt werden.

So können Positions- und Orientierungswerte desjenigen Glieds des ersten Manipulatorarms an dem der zweite Manipulatorarm angekoppelt ist, einerseits aus den Gelenkwinkelstellungen der in der kinematischen Kette diesem gekoppelten Glied des ersten Manipulatorarms vorgelagerten Gelenke des ersten Manipulatorarms bestimmt werden und andererseits zusätzlich aus den Gelenkwinkelstellungen der in der kinematischen Kette dem angekoppelten Glied des zweiten Manipulatorarms vorgelagerten Gelenke des zweiten Manipulatorarms bestimmt werden. So werden redundant zwei Positions- und Orientierungswerte für das von dem zweiten Manipulatorarm unmittelbar angekoppelte Glied des ersten Manipulatorarms erhalten, welche verglichen werden können und aufgrund des Vergleichs genauere Werte, beispielsweise Mittelwerte für die tatsächliche Position und Orientierung dieses Glieds des ersten Manipulatorarms bestimmt werden. Das zu betrachtende gekoppelte Glied kann insbesondere einen ersten Werkzeugsbezugspunkt, insbesondere einen ersten TCP (Tool-Center-Point) aufweisen, und der zweite angekoppelte Manipulatorarm dabei einen zweiten Werkzeugsbezugspunkt, insbesondere einen zweiten TCP (Tool-Center-Point) aufweisen und aus diesen beiden Positions- und Orientierungswerten ein gemeinsamer Mittelwert gebildet werden. So kann eine redundante Vorwärstrechnung von den Anrieben auf die Pose des Werkzeugsbezugspunkts erfolgen, da zwei Informationen über die tatsächliche Ist-Position des Werkzeugsbezugspunkts, insbesondere des TCPs vorliegen, wodurch eine Verrechnung mit höherer Genauigkeit der Endeffektorpose möglich ist.

Alternativ oder ergänzend kann aus den Werten der Ist-Stellungen der Gelenke des angekoppelten wenigsten einen weiteren Manipulatorarms die Position und Orientierung der Kopplungsstelle zwischen dem einen Manipulatorarm und dem wenigsten einen weiteren Manipulatorarm im Raum bestimmt werden und auf Basis dieser Position und Orientierung der Kopplungsstelle können die Werte der Gelenkstellungen des einen Manipulatorarms in der kinematischen Kette unterhalb der Kopplungsstelle rückgerechnet werden, wodurch redundante Werte für die Gelenkstellungen des einen Manipulatorarms bestimmt werden. So werden für jedes Gelenk zwei Werte für die Gelenkstellungen des einen Manipulatorarms bestimmt. Gegebenenfalls von einander abweichende, fehlerbehaftete Werte für das-selbe Gelenk können dann ausgemittelt werden, so dass die Genauigkeit der Bestimmung der Gelenkstellungen verbessert werden kann. Anders ausgedrückt bildet der wenigstens eine weitere Manipulatorarm eine Messmaschine, welche die Gelenkstellungen des einen Manipulatorarms zusätzlich misst, zu den eigenen Gelenkwertsensoren des einen Manipulatorarms.

Ein Ankoppeln des Gliedes des wenigstens einen anderen Manipulatorarms an eines der Glieder des einen Manipulatorarms erfolgt erfindungsgemäß durch eine Greifvorrichtung, welche mit dem Glied des wenigstens einen anderen Manipulatorarms verbunden ist und welche das Glied des einen Manipulatorarms im angekoppelten Zustand der Glieder ergreift.

Dabei kann die Greifvorrichtung des wenigstens einen anderen Manipulatorarms einerseits in einem Betriebsmodus dazu benutzt werden, selbst Objekte zu handhaben, andererseits in einem anderen Betriebsmodus dazu benutzt werden, sich an den einen Manipulatorarm anzukoppeln, um diesen zu unterstützen, wenn der eine Manipulatorarm das Objekt handhabt. Dazu kann der Greifer ausgebildet und/oder eingerichtet sein, sich mit einem Glied des einen Manipulatorarms zu verbinden. Alternativ oder ergänzend können die Glieder des einen Manipulatorarms derart gestaltet sein, dass sie Greifflächen aufweisen, welche durch einen einfach gestalteten Greifer des wenigstens einen anderen Manipulatorarms gegriffen werden können. So kann beispielsweise im Falle eines einfachen Zangengreifers das Glied bzw. die Glieder des einen Manipulatorarms gegenüberliegende Ebene Oberflächenabschnitte aufweisen, an welchen der Zangengreifer das Glied von gegenüberliegenden Seiten ergreifen und das Glied zwischen seinen beiden Greiferbacken einklemmen kann.

Mehrere konkrete Ausführungsbeispiele von gemäß den erfindungsgemäßen Verfahren betreibbaren Industrierobotern sind in der nachfolgenden Beschreibung unter Bezugnahme auf die beigefügten Figuren näher erläutert.

Es zeigen:
- Fig. 1: eine perspektivische Ansicht eines beispielhaften robotischen Arbeitsplatzes mit zwei Manipulatorarmen;
- Fig. 2a: eine schematische Darstellung zweier Manipulatorarme, bei denen ein Endglied des zweiten Manipulatorarms mit dem Endglied des ersten Manipulatorarms gekoppelt ist;
- Fig. 2b: eine schematische Darstellung zweier Manipulatorarme, bei denen das Endglied des zweiten Manipulatorarms mit einem distalen Glied des ersten Manipulatorarms gekoppelt ist;
- Fig. 2c: eine schematische Darstellung zweier Manipulatorarme, bei denen das Endglied des zweiten Manipulatorarms mit einem anderen Glied des ersten Manipulatorarms gekoppelt ist;
- Fig. 2d: eine schematische Darstellung zweier Manipulatorarme, bei denen das Endglied des zweiten Manipulatorarms mit einem proximalen Glied des ersten Manipulatorarms gekoppelt ist;
- Fig. 2e: eine schematische Darstellung zweier Manipulatorarme, bei denen ein vom Endglied abweichendes Glied des zweiten Manipulatorarms mit einem Glied des ersten Manipulatorarms gekoppelt ist;
- Fig. 3a: eine schematische Darstellung zweier Manipulatorarme, ohne verfahrensgemäßer Kopplung, bei welcher Konfiguration der eine Manipulatorarm aufgrund von Reaktionskräften elastisch stark von seiner Sollposition ausweicht;
- Fig. 3b: eine schematische Darstellung zweier Manipulatorarme, mit verfahrensgemäßer Kopplung, bei welcher Konfiguration der eine Manipulatorarm aufgrund von Reaktionskräften elastisch nur noch geringfügig von seiner Sollposition ausweicht;
- Fig. 4a: eine schematische Darstellung zweier Manipulatorarme, bei denen der erste Manipulatorarm an seinem Endglied mehrere Kupplungsglieder aufweist und der zweite Manipulatorarm ein Gegenkupplungsglied trägt, in einem entkoppelten Zustand;
- Fig. 4b: eine schematische Darstellung der beiden Manipulatorarme gemäß Fig. 4a, bei denen der erste Manipulatorarm an seinem Endglied mehrere Kupplungsglieder aufweist und der zweite Manipulatorarm ein Gegenkupplungsglied trägt, in einem angekoppelten Zustand;
- Fig. 5a: eine schematische Darstellung zweier Manipulatorarme, bei denen der erste Manipulatorarm an seinem Endglied Greifflächen aufweist und der zweite Manipulatorarm einen Greifer trägt, in einem entkoppelten Zustand;
- Fig. 5b: eine schematische Darstellung der beiden Manipulatorarme gemäß Fig. 5a, bei denen in einem angekoppelten Zustand der Greifer des zweiten Manipulatorarms an den Greifflächen des ersten Manipulatorarms angreift;
- Fig. 6a: eine perspektivische Ansicht des beispielhaften robotischen Arbeitsplatzes mit zwei Manipulatorarmen, bei dem das Werkstück zum Anheben durch lediglich den ersten Manipulatorarm zu schwer ist;
- Fig. 6b: eine perspektivische Ansicht des beispielhaften robotischen Arbeitsplatzes mit zwei Manipulatorarmen, bei dem der zweite Manipulatorarm mittels seines Greifers den ersten Manipulatorarm unterstützt; und
- Fig. 6c: eine perspektivische Ansicht des beispielhaften robotischen Arbeitsplatzes mit zwei Manipulatorarmen, bei dem aufgrund einer verfahrensgemäßer Ankoppelung der zweite Manipulatorarm ein Anheben des Werkstücks unterstützt.

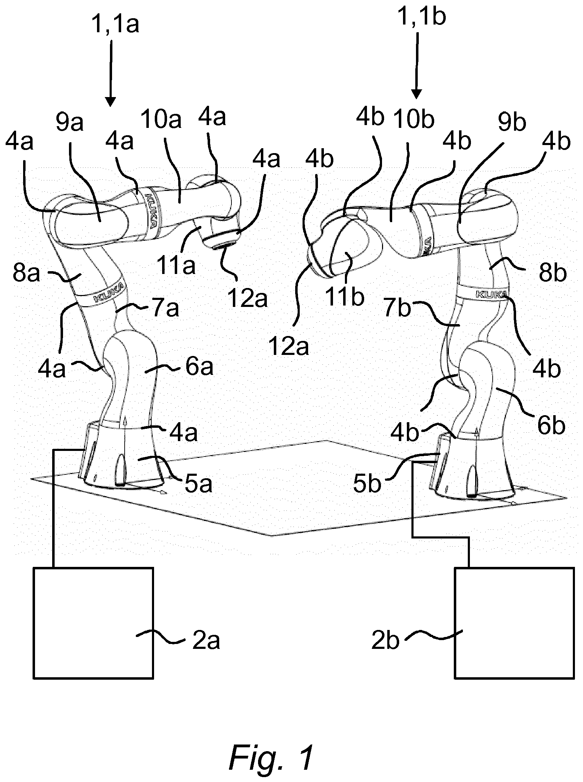

Die Fig. 1 zeigt einen beispielhaften robotischen Arbeitsplatz mit zwei Manipulatorarmen 1a, 1b zweier Industrieroboter 1. Jeder Industrieroboter 1 ist in der beispielhaften Ausführung als ein so genannter Leichtbauroboter des Typs KUKA LBR ausgeführt, der einen Manipulatorarm 1a, 1b und eine jeweils zugeordnete Robotersteuerung 2a, 2b aufweist. Jeder Manipulatorarm 1a, 1b umfasst im Falle des vorliegenden Ausführungsbeispiels mehrere, nacheinander angeordnete und mittels sieben Gelenke 4a, 4b drehbar miteinander verbundene Glieder 5a, 5b bis 12a, 12b.

Die Robotersteuerungen 2a, 2b der Industrieroboter 1 sind ausgebildet bzw. eingerichtet, ein Roboterprogramm auszuführen, durch welches die Gelenke 4a, 4b des jeweiligen Manipulatorarms 1a, 1b gemäß seines Roboterprogramms automatisiert oder in einem Handfahrbetrieb automatisch verstellt bzw. drehbewegt werden können. Dazu sind die Robotersteuerungen 2a, 2b mit ansteuerbaren elektrischen Antrieben verbunden, die ausgebildet sind, die Gelenke 4a, 4b des zugehörigen Manipulatorarms 1a, 1b zu verstellen.

Die Robotersteuerungen 2a, 2b sind ausgebildet und/oder eingerichtet, die Verfahren zum Handhaben von Objekten 13, wie im Folgenden anhand mehrerer konkreter Ausführungsbeispiele näher beschrieben, durchzuführen.

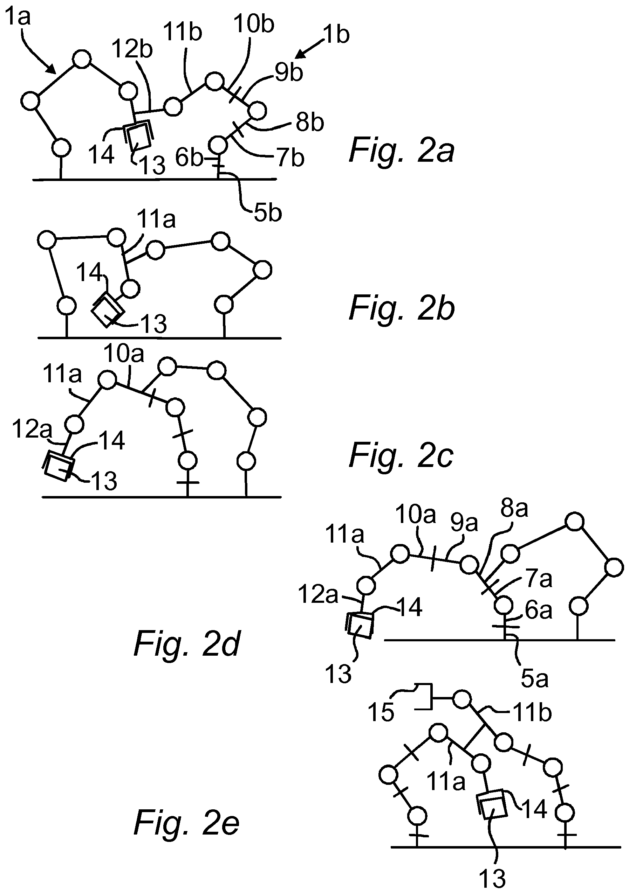

In den Figuren 2a bis 2e sind beispielhaft eine Reihe von verschiedenen Arten von erfindungsgemäßen Ankoppelungen schematisch dargestellt. Die dargestellten Varianten sind nicht abschließend, sondern es können je nach Anwendungsfall auch nicht dargestellte Kombinationen von Gliedpaaren miteinander gekoppelt sein. Die Fig. 2a repräsentiert dabei ein Verfahren zum Handhaben von Objekten 13 mittels beispielhaft zweier Industrieroboter 1, die jeweils einen Manipulatorarm 1a, 1b umfassen, der mehrere aufeinander folgende Glieder 5a, 5b bis 12a, 12b aufweist, die durch verstellbare Gelenke 4a, 4b verbunden sind. Die Gelenke 4a, 4b sind von den beiden Steuervorrichtungen 2a, 2b (Fig. 1) angesteuert verstellbar. Der erste Manipulatorarm 1a weist ein erstes Endglied 12a und der zweite Manipulatorarm 1b ein zweites Endglied 12b auf.

In allen gezeigten beispielhaften Varianten wird das Objekt 13 mittels des ersten Manipulatorarms 1a gegriffen. Das Greifen erfolgt derart, dass das Objekt 13 mit dem ersten Endglied 12a durch einen Greifer 14 verbunden ist. Der zweite Manipulatorarm 1b weist einen eigenen Greifer 15 auf, um mittels des zweiten Greifers 15 an ein Glied 5a bis 12a des ersten Manipulatorarms 1a ankoppeln zu können.

In den Fällen der Figuren 2a bis 2d stellt das anzukoppelnde Glied des wenigstens einen anderen Manipulatorarms, im Ausführungsbeispiel also des zweiten Manipulatorarms 1b das zweite Endglied 12b dar. Im Falle der Fig. 2e stellt das anzukoppelnde Glied des wenigstens einen anderen Manipulatorarms, im Ausführungsbeispiel also des zweiten Manipulatorarms 1b nicht das zweite Endglied 12b dar, sondern repräsentativ für ein beliebiges andere Glied 5b bis 11b des zweiten Manipulatorarms 1b, das Glied 11b.

In der Fig. 2a koppelt das Endglied 12b des zweiten Manipulatorarms 1b an dem Endglied 12a des ersten Manipulatorarms 1a an. Dadurch können durch den zweiten Manipulatorarm 1b beispielsweise Haltekräfte und/oder Reaktionskräfte sehr nahe am Objekt 13 aufgenommen werden, ohne dass der zweite Manipulatorarm 1b das Objekt 13 selbst greifen muss. Insoweit benötigt der Manipulatorarm 1b keinen speziellen Greifer, der zum Fassen des Objekts 13 ausgebildet sein müsste. Im Falle einer Unterstützung des ersten Manipulatorarms 1a durch den zweiten Manipulatorarm 1b, um die Gelenkwinkelstellungen des ersten Manipulatorarms 1a redundant erfassen zu können, ist ein Ankoppeln des zweiten Manipulatorarms 1b an dem Endglied 12a des ersten Manipulatorarms 1a deshalb sinnvoll, weil dann sämtliche Gelenkwinkelstellungen der Gelenke 4a des ersten Manipulatorarms 1a rückgerechnet werden können.

In der Fig. 2b koppelt das Endglied 12b des zweiten Manipulatorarms 1b nicht an dem Endglied 12a des ersten Manipulatorarms 1a, sondern an dem vorgelagerten Glied 11a an. Dadurch kann zwar nicht die komplette kinematische Kette des ersten Manipulatorarms 1a erfasst bzw. rückgerechnet werden, aber es können Haltekräfte und/oder Reaktionskräfte noch sehr nahe an dem Objekt 13 aufgenommen werden, jedoch mit einem gewissen Abstand zum Objekt 13. Dies kann sinnvoll sein, wenn beispielsweise das Objekt 13 sperrig und/oder sehr lang ist, derart, dass der zweite Manipulatorarm 1b nicht nahe genug herankommen kann, insbesondere das Endglied 12a des ersten Manipulatorarms 1a gegebenenfalls nicht erreichen kann. Auch kann durch den zweiten Manipulatorarm 1b beispielsweise ein Ziehen in eine Richtung gewünscht sein, die entgegen der Ausrichtung des Objekts 13 bzw. des Endglied 12a des ersten Manipulatorarms 1a gerichtet ist.

In der Fig. 2c koppelt das Endglied 12b des zweiten Manipulatorarms 1b an einem mittleren Glied 10a an. Dadurch können beispielsweise die Grundachsen, d.h. Gelenke 4b zwischen den Gliedern 5a bis 9a entlastet werden.

In der Fig. 2d koppelt das Endglied 12b des zweiten Manipulatorarms 1b an dem Glied 8a an. Dadurch können insbesondere die Grundachsen, d.h. Gelenke 4b zwischen den Gliedern 5a bis 8a besonderes entlastet werden. Dies kann beispielsweise sinnvoll sein, wenn der erste Manipulatorarm 1a an den grenzen seines Arbeitsraumes tätig ist, was zur Folge hat, dass gerade die Grundachsen, d.h. Gelenke 4b zwischen den Gliedern 5a bis 8a besonderes stark mit Kräften und/oder Momenten belastet werden.

In der Fig. 2e koppelt nicht das Endglied 12b des zweiten Manipulatorarms 1b, sondern ein mittleres Glied 11b des zweiten Manipulatorarms 1b an einem mittleren Glied 11a des ersten Manipulatorarms 1a an. Die in Fig. 2e dargestellte Ankoppelung des Glieds 11b an das Glied 11a steht dabei nur repräsentativ für jede andere Gliedpaarung von erstem Manipulatorarm 1a und zweitem Manipulatorarm 1b, bei denen das Endglied 12b des zweiten Manipulatorarm 1b frei bleibt. An diesem freien Endglied 12b kann dann beispielsweise der Greifer 15 angeordnet sein, der an der vorliegenden Kopplungsart nicht teilnimmt. Dies kann beispielsweise dann der Fall sein, wenn es sich um einen großen, insbesondere sperrigen Greifer 15 handelt, der zu anderen Handhabungszwecken an dem zweiten Manipulatorarm 1b angeflanscht ist und selbst nicht das Greifen von Gliedern 5a bis 12a des ersten Manipulatorarms 1a übernehmen kann. Ein solches Bilden von geschlossenen Teilketten kann je nach Wahl der zu koppelnden Partner, die Bewegung des ersten Manipulatorarms 1a einschränken oder in gewissen Freiheitsgraden blockieren. Dies kann beispielsweise gezielt dazu genutzt werden, den Manipulatorarm 1a bis zum gekoppelten Glied mit hoher Steifigkeit zu fixieren.

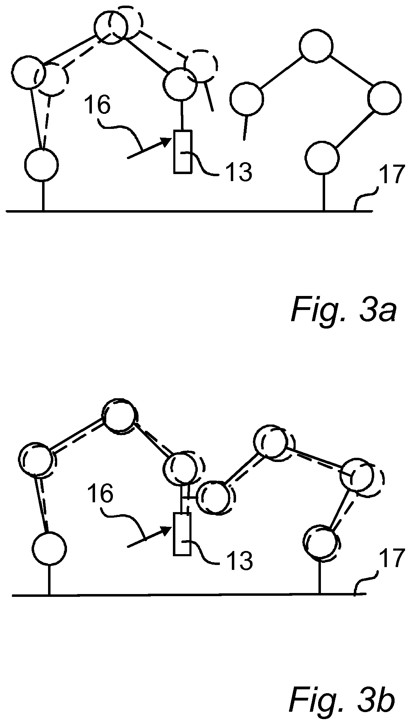

In den Figuren 3a und 3b ist ein verfahrensgemäßes Einwirken auf das Objekt 13 mittels eines Gegenstandes 16 schematisch dargestellt. Dabei erfolgt ein vollständiges oder teilweises Aufnehmen von Reaktionskräften und/oder Reaktionsmomente, welche in Folge des Einwirkens in den ersten Manipulatorarm 1a eingeleitet werden, durch den zweiten Manipulatorarm 1b über sein an dem Endglied 12a des ersten Manipulatorarms 1a angekoppeltes Endglied 12b des zweiten Manipulatorarms 1b. In dieser Ausgestaltung des Verfahrens kann das Objekt 13 somit ein Werkstück sein, welches durch den ersten Manipulatorarm 1a festgehalten wird und durch ein Werkzeug, welches den Gegenstand 16 bildet, bearbeitet wird. Dabei kann der erste Manipulatorarm 1a, welcher das Werkstück greift, das Werkstück entweder lediglich festhalten bspw. auf einem Bearbeitungstisch 17, so dass das externe, separate Werkzeug auf das Werkstück einwirken kann, oder das vom Manipulatorarm 1a gegriffene Werkstück kann an das Werkzeug, insbesondere feststehende Werkzeug herangeführt werden bzw. daran entlang geführt werden. In der Fig. 3a ist der erste Manipulatorarm 1a in einer ersten Pose in dunkler Gestalt gezeigt, welche der Manipulatorarm 1a einnimmt, wenn auf das Objekt 13 nicht eingewirkt wird. In hellerer Gestalt ist außerdem der erste Manipulatorarm 1a nochmals dargestellt, und zwar in einer durch Reaktionskräfte veränderten Pose. Eine solche veränderte Pose kann beispielsweise durch unvermeidbare Elastizitäten in den Gliedern 5a bis 12a und/oder Gelenken 4a des ersten Manipulatorarms 1a auftreten, wenn Kräfte von außen auf das Objekt 13 einwirken. Lediglich zur besseren Visualisierung ist der Grad der Änderung der Pose insoweit übertrieben dargestellt. Werden nun Reaktionskräfte und/oder Reaktionsmomente verfahrensgemäß durch den zweiten Manipulatorarm 1b, wie in Fig. 3b gezeigt, aufgenommen, so kann die Änderung der Pose des ersten Manipulatorarms 1a deutlich verringert, wenn nicht sogar ganz aufgehoben werden. Eine aufgrund der Reaktionskräfte und/oder Reaktionsmomente veränderte Pose des zweiten Manipulatorarms 1b ist, wie in Fig. 3b durch den in hellerer Gestalt dargestellten zweiten Manipulatorarm 1b, insoweit unschädlich, da die Pose des zweiten Manipulatorarms 1b nicht maßgeblich für die Position und die Orientierungen des Objekts 13 sind, sondern maßgeblich durch den ersten Manipulatorarm 1a bestimmt wird, der das Objekt 13 hält.

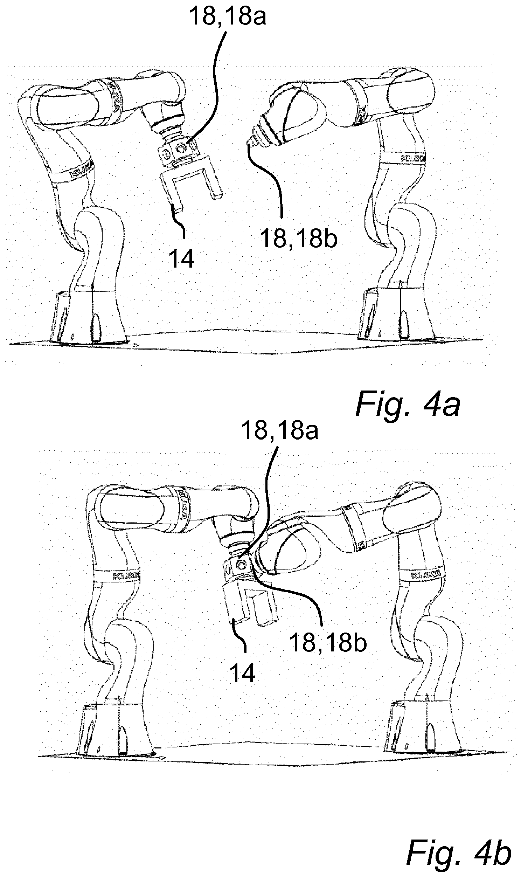

Die Figuren 4a und 4b zeigen anhand eines Beispiels, wie ein Ankoppeln des Endglieds 12b des zweiten Manipulatorarms 1b an das Endglied 12a des ersten Manipulatorarms 1a in nicht erfindungsgemäßer Weise durch eine Kupplungsvorrichtung 18 erfolgen kann, welche ein erstes mit dem Endglied 12a des ersten Manipulatorarms 1a fest verbundenes Kupplungsglied 18a und ein zweites mit dem Endglieds 12b des zweiten Manipulatorarms 1b fest verbundenes Gegenkupplungsglied 18b aufweist, welches in einem gekoppelten Zustand an das Kupplungsglied 18a angekoppelt ist. Im vorliegenden Ausführungsbeispiel weist das Endglied 12a des ersten Manipulatorarms 1a mehrere Kupplungsglieder 18a, namentlich sechs Kupplungsglieder 18a auf. Die sechs Kupplungsglieder 18a sind an sechs ebenen Außenoberflächen eines hexagonalen Zylinders des Endglieds 12a des ersten Manipulatorarms 1a angeordnet, die in unterschiedliche Raumrichtungen ausgerichtet sind. Prinzipiell kann das Gegenkupplungsglied 18b des zweiten Manipulatorarms 1b in jedes einzelne der Kupplungsglieder 18a formschlüssig eingreifen und darin verriegeln, um den zweiten Manipulatorarm 1b an den ersten Manipulatorarm 1a anzukoppeln, wie dies in Fig. 4b beispielhaft gezeigt ist.

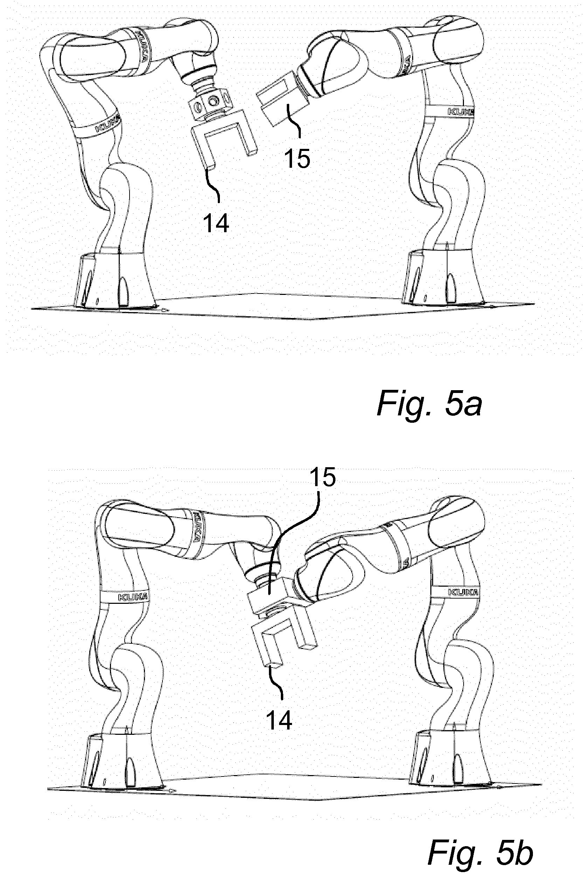

Die Figuren 5a und 5b zeigen eine erfindungsgemäße Abwandlung gegenüber den Figuren 4a und 54b dahingehend, dass ein Ankoppeln des Endglieds 12b des zweiten Manipulatorarms 1b an das Endglied 12a des ersten Manipulatorarms 1a nicht durch eine Kupplungsvorrichtung 18, insbesondere nicht durch das Gegenkupplungsglied 18b erfolgt, sondern durch eine eigene Greifvorrichtung, d.h. dem Greifer 15 erfolgt, welche mit dem Endglied 12b des zweiten Manipulatorarms 1b verbunden ist und welcher Greifer 15 das Endglied 12a des ersten Manipulatorarms 1a im angekoppelten Zustand an dem hexagonalen Zylinder des Endglieds 12a ergreift.

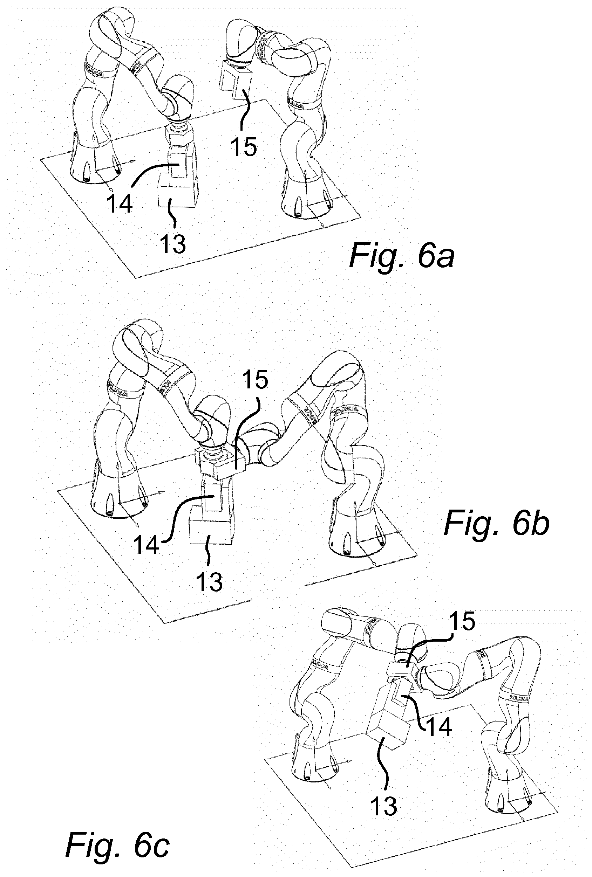

Die Figuren 6a bis 6c zeigen eine dem Verfahren entsprechende beispielhafte Abfolge mit den Schritten des Greifens des Objekts 13 ausschließlich mittels des Greifers 14 des ersten Manipulatorarms 1a (Fig. 6a), des Ankoppelns des Greifers 15 des zweiten Manipulatorarms 1b an das Endglied 12a des ersten Manipulatorarms 1a (Fig. 6b), und des gemeinsamen Anhebens des Objekts 13 durch den ersten Manipulatorarm 1a und den zweiten Manipulatorarm 1b derart, dass der zweite Manipulatorarm 1b über sein an dem Endglied 12a des ersten Manipulatorarms 1a angekoppelten Greifer 15 einen Teil der Haltekräfte übernimmt(Fig. 6c).

## Patentansprüche

1. Verfahren zum Handhaben von Objekten (13) mittels wenigstens zweier Industrieroboter (1), die jeweils einen Manipulatorarm (1a, 1b) umfassen, der mehrere aufeinander folgende Glieder (5a-12a, 5b-12b) aufweist, die durch verstellbare Gelenke (4a, 4b) verbunden sind, die von wenigstens einer Steuervorrichtung (2a, 2b) angesteuert verstellbar sind, wobei der eine Manipulatorarm (1a) ein erstes Endglied (12a) und der wenigstens eine andere Manipulatorarm (1b) ein zweites Endglied (12b) aufweist, aufweisend die folgenden Schritte:
- Greifen des Objekts (13) mittels des einen Manipulatorarms (1a) derart, dass das Objekt (13) mit dem ersten Endglied (12a) verbunden ist, und
- Ankoppeln eines Gliedes (5b-12b) des wenigstens einen anderen Manipulatorarms (1b) an eines der Glieder (5a-12a) des einen Manipulatorarms (1a),
**dadurch gekennzeichnet, dass** ein Ankoppeln des Gliedes (5b-12b) des wenigstens einen anderen Manipulatorarms (1b) an eines der Glieder (5a-12a) des einen Manipulatorarms (1a) durch eine Greifvorrichtung (15) erfolgt, welche mit dem Glied (5b-12b) des wenigstens einen anderen Manipulatorarms (1b) verbunden ist und welche das Glied (5a-12a) des einen Manipulatorarms (1a) im angekoppelten Zustand der Glieder (5a-12a, 5b-12b) ergreift.

2. Verfahren nach Anspruch 1, bei dem das anzukoppelnde Glied (5b-12b) des wenigstens einen anderen Manipulatorarms (1b) das zweite Endglied (12b) ist.

3. Verfahren nach Anspruch 1 oder 2, aufweisend den weiteren Schritt:
- gemeinsames Anheben des Objekts (13) durch den einen Manipulatorarm (1a) und den wenigstens einen anderen Manipulatorarm (1b) derart, dass der wenigstens eine andere Manipulatorarm (1b) über sein an einem der Glieder (5a-12a) des einen Manipulatorarms (1a) angekoppeltes Glied (5b-12b) einen Teil der Haltekräfte übernimmt.

4. Verfahren nach einem der Ansprüche 1 bis 3, aufweisend die weiteren Schritte:
- Einwirken auf das Objekt (13) mittels eines Gegenstandes (16) oder Einwirken auf einen Gegenstand (16) mittels des Objekts (13), und
- vollständiges oder teilweises Aufnehmen von Reaktionskräften und/oder Reaktionsmomente, welche in Folge des Einwirkens in den einen Manipulatorarm (1a) eingeleitet werden, durch den wenigstens einen anderen Manipulatorarm (1b) über sein an einem der Glieder (5a-12a) des einen Manipulatorarms (1a) angekoppeltes Glied (5b-12b).

5. Verfahren nach einem der Ansprüche 1 bis 4, aufweisend den weiteren Schritt:
- Ansteuern der Gelenke (4a) des einen Manipulatorarms (1a) mittels der wenigstens einen Steuervorrichtung (2a) auf Grundlage von Messwerten über die Stellungen der Gelenke (4a) sowohl des einen Manipulatorarms (1a), als auch auf Grundlage von Messwerten über die Stellungen der Gelenke (4b) des wenigstens einen anderen Manipulatorarms (1b).

## Claims

1. Method for manipulating objects (13) using at least two industrial robots (1) which each comprise a manipulator arm (1a, 1b) which has a plurality of links (5a-12a, 5b-12b) following on from one another which are connected by adjustable joints (4a, 5b) which are controlled adjustably by at least one controller (2a, 2b), wherein the one manipulator arm (1a) has a first end link (12a) and the at least one other manipulator arm (1b) has a second end link (12b), comprising the following steps:
- gripping the object (13) with the one manipulator arm (1a) such that the object (13) is connected to the first end link (12a) and
- coupling a link (5b-12b) of the at least one other manipulator arm (1b) to one of the links (5a-12a) of the one manipulator arm (1a),
**characterised in that** the link (5b-12b) of the at least one other manipulator arm (1b) is coupled to one of the links (5a-12a) of the one manipulator arm (1a) by a gripping device (15) which is connected to the link (5b-12b) of the at least one other manipulator arm (1b) and which grips the link (5a-12a) of the one manipulator arm (1a) in the coupled state of the links (5a-12a, 5b-12b).

2. Method according to claim 1, wherein the link (5b-12b) of the at least one other manipulator arm (1b) to be coupled is the second end link (12b).

3. Method according to claim 1 or 2, comprising the following step:
- jointly lifting the object (13) using the one manipulator arm (1a) and the at least one other manipulator arm (1b) in such a manner that the at least one other manipulator arm (1b) takes over a portion of the holding forces via its link (5b-12b) coupled to one of the links (5a-12a) of the one manipulator arm (1a).

4. Method according to any of claims 1 to 3, comprising the additional steps:
- working on the object (13) using a body (16) or working on a body (16) using the object (13) and
- fully or partly absorbing reaction forces and/or reaction torques which are introduced as a result of the action on the one manipulator arm (1a) by the at least one other manipulator arm (1b) via its link (5b-12b) coupled to one of the links (5a-12a) of the one manipulator arm (1a).

5. Method according to any of claims 1 to 4, comprising the additional step:
- controlling the joints (4a) of the one manipulator arm (1a) with the at least one control device (2a) based on measured values regarding the positions of the joints (4a) both of the one manipulator arm (1a) and also on the basis of measured values regarding the positions of the joints (4b) of the at least one other manipulator arm (1b).

## Revendications

1. Procédé de manipulation d'objets (13) au moyen d'au moins deux robots industriels (1) qui comprennent chacun un bras manipulateur (1a, 1b) qui présente une pluralité de membres (5a-12a, 5b-12b) successifs qui sont reliés par des articulations réglables (4a, 4b), qui peuvent être réglés par pilotage par au moins un dispositif de commande (2a, 2b), ledit un bras manipulateur (1a) présentant un premier membre d'extrémité (12a) et ledit au moins un autre bras manipulateur (1b) présentant un deuxième membre d'extrémité (12 b), le procédé présentant les étapes suivantes :
- saisir l'objet (13) au moyen dudit un bras manipulateur (1a) de telle sorte que l'objet (13) est relié audit premier membre d'extrémité (12a) ; et
- accoupler un membre (5b-12b) dudit moins un autre bras manipulateur (1b) à l'un des membres (5a-12a) dudit l'un bras manipulateur (1a),
**caractérisé en ce qu'**un accouplement du membre (5b-12b) dudit au moins un autre bras manipulateur (1b) avec un des membres (5a-12a) dudit un bras manipulateur (1a) est réalisé au moyen d'un dispositif de préhension (15) qui est relié au membre (5b-12b) dudit au moins un autre bras manipulateur (1b) et qui saisit le membre (5a-12a) dudit un bras manipulateur (1a) dans l'état accouplé des membres (5a-12a, 5b-12b).

2. Procédé selon la revendication 1, dans lequel le membre (5b-12b) à accoupler dudit moins un autre bras manipulateur (1b) est le deuxième membre terminal (12b).

3. Procédé selon la revendication 1 ou 2 comprenant l'autre étape suivante :
- soulever l'objet (13) à l'aide conjointement dudit bras manipulateur (1a) et dudit au moins autre bras manipulateur (1b) de telle sorte que ledit au moins un autre bras manipulateur (1b) assume une partie des forces de maintien via son membre (5b-12b) accouplé à un des membres (5a-12a) dudit un bras manipulateur (1a).

4. Procédé selon l'une quelconque des revendications 1 à 3 comprenant les autres étapes suivantes :
- agir sur ledit objet (13) au moyen d'un élément (16) ou agir sur un élément (16) au moyen dudit objet (13), et
- absorber totalement ou partiellement des forces de réaction et/ou de moments de réaction qui sont introduit(e)s dans un bras manipulateur (1a) par l'action dudit au moins un autre bras manipulateur (1b) via son membre (5b-12b) accouplé à l'un des éléments (5a-12a) dudit un bras manipulateur (1a).

5. Procédé selon l'une quelconque des revendications 1 à 4 comprenant l'autre étape suivante :
- piloter les articulations (4a) dudit un bras manipulateur (1a) au moyen dudit au moins un dispositif de commande (2a) sur la base de valeurs mesurées concernant les positions des articulations (4a) non seulement du bras manipulateur (1a) mais aussi sur la base de valeurs mesurées concernant les positions des articulations (4b) dudit au moins un autre bras manipulateur (1b).
